# EUROPÄISCHE PATENTSCHRIFT

(11) **EP 2 992 426 B1**
(45) Veröffentlichungstag und Bekanntmachung des Hinweises auf die Patenterteilung: **28.11.2018**
(21) Anmeldenummer: 14730114.7
(22) Anmeldetag: 04.06.2014
(51) Int. Cl.: G06F 11/07, G06F 9/445, G06F 11/14

(54) **VERFAHREN ZUM VERIFIZIEREN EINES BETRIEBSSICHEREN ZUSTANDES EINES RECHNERS**
METHOD FOR VERIFYING AN OPERATIONALLY SAFE STATE OF A COMPUTER
PROCÉDÉ POUR VÉRIFIER UN ÉTAT DE FONCTIONNEMENT SÛR D'UN CALCULATEUR

(30) Priorität: 19.06.2013 DE 102013211504
(43) Veröffentlichungstag der Anmeldung: 09.03.2016
(73) Patentinhaber: Siemens Mobility GmbH, 81739 München (DE)
(72) Erfinder: ECKELMANN-WENDT, Uwe, 38302 Wolfenbüttel (DE)
(86) Internationale Anmeldenummer: PCT/EP2014/061594
(87) Internationale Veröffentlichungsnummer: WO 2014/202388

(56) Entgegenhaltungen:
- EP-A1- 2 447 843
- WO-A2-2006/053668
- DE-A1-102010 015 285

## Beschreibung

Die Erfindung betrifft ein Verfahren zum Verifizieren eines betriebssicheren Zustandes eines Rechners zur Ansteuerung eines sicherheitskritischen Systems, insbesondere Eisenbahnsicherungssystems.

Sicherheitskritische Systeme sind häufig Steuer- und Regelsysteme, die beispielsweise zur Stellwerkssteuerung, Antriebs- und Bremsansteuerung für Verkehrsmittel aller Art sowie auch Fertigungs- und Prozessleittechnik oder Kraftwerksregelung eingesetzt werden. Üblicherweise werden dabei mittels Sensoren Messgrößen erfasst, um Aktionen an Stellgliedern auszuführen. Für diese Steuerungs- und Regelungsaufgaben müssen oft sicherheitsbezogene Eigenschaften gewährleistet sein. Sicherheitsstufen sind in der CENELEC Norm EN50129 von SILO - signaltechnisch nicht sicher - bis SIL4 - signaltechnisch hochgradig sicher - definiert.

Für Software-Updates kann die Einhaltung der sicherheitsbezogenen Eigenschaften unter Umständen nicht automatisiert gewährleistet werden, sondern muss durch betriebliche Maßnahmen sichergestellt werden. Dabei muss von einem Bediener bestätigt werden, dass sich der das sicherheitskritische System steuernde Rechner oder die Rechneranordnung in einem betriebssicheren Zustand befindet. Das Laden von Software auf einen falschen Rechner oder eine fehlerhafte Software darf auf keinen Fall zu einer Ansteuerfähigkeit des sicherheitskritischen Systems durch den Rechner führen.

Die nachfolgende Beschreibung bezieht sich im Wesentlichen auf die Anwendung des Verfahrens zum Verifizieren des betriebssicheren Zustandes eines Eisenbahnsicherungssystems, ohne dass die Erfindung auf diese spezielle Anwendung beschränkt ist.

Eisenbahnsicherungssysteme umfassen insbesondere die Ansteuerung von Feldelementen, beispielsweise Weichen, Signale, Gleisfreimeldeeinrichtungen und Bahnübergänge. Das Laden von Programmen auf den ansteuernden Rechner ist problematisch, wenn vor Abschluss der manuellen Prüfung, ob die richtigen Programme unverfälscht auf den richtigen Rechner abgelegt sind, eine Außenwirkung, das heißt ein wirksames Laufen der Programme, möglich ist.

Aus der DE 10 2009 009 947 A1 ist ein Verfahren zur Adresszuordnung für einen Rechner bekannt, bei dem die Adresse der Hardware zugeordnet wird, so dass die Adresse nicht durch Softwareeingriffe verändert oder gelöscht werden kann.

Ein gattungsgemäßes Verfahren ist in der DE 10 2010 015 285 A1 offenbart. Dabei erzeugt das System einen nicht maschinenauswertbaren Aktivierungscode, der zwecks Bestätigung des betriebssicheren Zustandes manuell in das System eingegeben werden muss.

Nachteilig bei den bekannten Verfahren ist vor allem, dass es einer Vereinbarung bedarf, den Rechner nur in betriebssicherem Zustand zu nutzen, so dass die Entscheidung, ob tatsächlich ein betriebssicherer Zustand vorliegt, von einem Bediener getroffen werden muss. Außerdem ist nicht ausgeschlossen, dass irgendein Programm den Rechner unter Umgehung des Aktivierungscodes wirksam schalten kann. Ein Anlaufen mit einem noch unbestätigten, aber ansonsten funktionsfähigen Programm, kann zum Beispiel bei den Rechnern der Bauart SIMIS nicht verhindert werden.
Bei einem ferngeladenen Rechner wird nach Rücklesen der geladenen Software oder deren Hashwerte der korrekte Ladevorgang sichergestellt. Allerdings besteht eine Lücke zwischen dem Laden der Software und dem Abschluss der Prüfung. Der Rechner kann während dieser Lücke mit einem ungeprüften und fehlerhaften Programm von außen unerkennbar lauffähig sein und in diesem nicht sicheren Zustand bereits genutzt werden.
Der Erfindung liegt die Aufgabe zugrunde, ein gattungsgemäßes Verfahren anzugeben, das verhindert, dass das geladene Programm nach außen wirken kann, bevor sichergestellt ist, dass das Programm fehlerfrei ist und auf dem vorgesehenen Rechner abläuft.

Erfindungsgemäß beinhaltet das Verfahren die in Anspruch 1 dargestellte Schritte.

Das gesondert übertragene Anlaufsiegel ergänzt die Überprüfung des Programmcodes und der Rechneridentifikationsnummer gemäß dem ersten Schritt des erfindungsgemäßen Verfahrens. Das Verfahren ermöglicht die Prüfung der korrekten Programmablage, der Version des Programmes und anderer Sicherheitsbedingungen, bevor das Programm wirksam laufen kann. Nur wenn die in Schritt 3 verknüpften Werte für das Anlaufsiegel, den Programmcode und der Rechneridentifikationsnummer konsistent sind, das heißt, dem zweiten Erwartungswert entsprechen, kann der Rechner für die Ansteuerung des sicherheitskritischen Systems genutzt werden. Ein Anlaufen des Rechners ohne übermitteltes Anlaufsiegel ergibt keinen korrekten Freischaltcode, da erst das quasi nachgelieferte Anlaufsiegel eine externe Prüfung erlaubt, ob das richtige Programm auf dem richtigen Rechner korrekt in den Programmspeicher abgelegt wurde. Erst bei Übereinstimmung mit dem erwarteten Verknüpfungswert erfolgt eine bewusste Freischaltung der Ausgabebaugruppe des Rechners. Die Ausgabebaugruppe des Rechners, das heißt eine Hardwarebaugruppe, muss freigeschaltet werden, bevor das Rechnerprogramm nach außen wirken kann. Das zu dieser Freischaltung erforderliche Anlaufsiegel verhindert nicht den Programmablauf selbst, sondern stellt nur eine Bedingung dar, die die Außenwirkung des Rechnerprogramms erlaubt oder verhindert.

Die Verknüpfung zum Errechnen des Freischaltcodes erfolgt in einem nicht umladbaren Programmspeicherbereich des Rechners, damit sichergestellt ist, dass nicht irgendein Programm des Rechners unter Umgehung der vorgesehenen Freischaltcodeerzeugung den Rechner sicherungstechnisch wirksam schalten kann. Der Freischaltcode stellt den Initialwert für Hardwareeigenschaften dar, ohne die der Rechner nicht nach außen wirkt. Ist der Freischaltcode nicht korrekt, ist der Rechner nicht wirksam lauffähig bezüglich des zu steuernden sicherheitskritischen Systems, kann aber noch über die ausgewiesene Datenverbindung, beispielsweise mit Programmladeeinrichtungen, kommunizieren, das heißt Daten liefern und entgegennehmen. Prinzipiell muss der Freischaltcode Eigenschaften haben, die über die Hardware des Rechners erkannt werden, um den Rechner in einen wirksamen Modus zu schalten. Das Verfahren erlaubt ein gezieltes Hinzuschalten der "Ausgabetore" des Rechners, damit der Rechner auf seine Umgebung wirken kann. Ohne diese Freischaltung läuft zwar das Rechnerprogramm, aber die Ausgaben an das sicherheitskritische System verpuffen, da die Hardware nicht auf sie reagiert.

Nach dem Laden des Rechnerprogramms ist der Rechner in eingeschränktem Maße lauffähig, kann aber noch nicht nach außen wirken, da noch kein Anlaufsiegel abgelegt ist. Zunächst wird das Rechnerprogramm oder dessen Programmcode beziehungsweise Hashwert zurückgelesen und mit den ersten Erwartungswertem verglichen. Dabei wird auch der Rechner über seine rechnerspezifische Identifikationsnummer eindeutig identifiziert. Wenn von dem erwarteten Rechner der erwartete Hashwert des Rechnerprogramms zurückgelesen werden kann, wird das nur für diesen Rechner und nur für dieses Rechnerprogramm geltende Anlaufsiegel auf dem nicht umladbaren Programmspeicherbereich des Rechners gespeichert. Unter einem nicht umladbaren Programmspeicherbereich wird ein Bereich verstanden, in dem das Programm nicht umgeladen werden kann, wohl aber Werte gespeichert und ausgewertet oder verarbeitet werden können. Dieser nicht umladbare Programmspeicherbereich verrechnet den Hashwert des Rechnerprogramms, dessen eindeutige Identifikationsnummer und das Anlaufsiegel zu dem Freischaltcode. Dieser errechnete Wert ist nur dann ein wirksamer Freischaltcode, wenn Rechnerprogramm, Rechneridentifikationsnummer und Anlaufsiegel zusammenpassen. Der Freischaltcode wird an die Hardware der Ausgabebaugruppe des Rechners weitergegeben, wodurch sichergestellt wird, dass nur diese Hardware - und keine Software - den Rechner wirksam schalten kann.

Gemäß Anspruch 2 ist vorgesehen, dass die Ausgabebaugruppe des Rechners die Adresse des Programmspeicherbereiches, der den Freischaltcode erzeugt hat, mit einem Sollwert vergleicht. Auf diese Weise wird zusätzlich sichergestellt, dass der Freischaltcode von dem dafür vorgesehenen nicht umladbaren Programmspeicherbereich stammt und nicht irgendein anderer Programmteil den Freischaltcode an die Hardware der Ausgabebaugruppe leitet. Ein solcher Freischaltcode unter Umgehung des nicht umladbaren Programmspeicherbereiches wird von der Ausgabebaugruppe nicht akzeptiert. Die Ausgabebaugruppe wertet dafür die physikalische Programmadresse der Herkunft des Freischaltcodes aus.

Vorzugsweise ist der nicht umladbare Programmspeicherbereich gemäß Anspruch 3 in einem PLD (Programmable Logic Device) der CPU (Control Processing Unit) des Rechners vorgesehen. Die PLD der CPU errechnet gemäß einem programmierten Algorithmus aus dem Programmcode des Rechnerprogramms, der Rechneridentifikationsnummer und dem Anlaufsiegel den Freischaltcode. Dabei muss ein vorbekannter Wert für den Freischaltcode resultieren, welcher nur von der in den PLD laufenden Code an die Ausgabebaugruppe übergeben werden kann. Bei SIMIS-Rechnern kann der Freischaltcode der Initialcode für die zyklische Taktfreigabe sein, die in jeder SIMIS-CPU-Hardware als Watchdogeigenschaft enthalten ist.

Gemäß Anspruch 4 ist vorgesehen, dass der nicht umladbare Programmspeicherbereich nach jeder Änderung des Anlaufsiegels, insbesondere bei einem Neuladen des Rechnerprogramms, den Freischaltcode errechnet, wobei das gegebenenfalls vorhandene Anlaufsiegel gelöscht und ein aktuelles Anlaufsiegel gespeichert sein muss. Auf diese Weise wird zusätzliche Sicherheit bei jeder Änderung des Anlaufsiegels und nicht nur bei dem Erstladen des Rechnerprogramms erreicht. Der Freischaltcode muss zumindest bei jeder Änderung des Siegels neu errechnet werden. Eine Neuberechnung nur bei Neuladen des Programmes reicht nicht aus, denn dann würde ein Löschen des Anlaufsiegels möglicherweise auf den errechneten Freischaltcode nicht wirken.

Das Anlaufsiegel muss nicht bei jedem Rechnerstart gelöscht werden, sondern nur wenn ein Neuladen des Rechnerprogramms erfolgt, da bei Neustart der Hashwert des Programms und die Rechneridentifikationsnummer unverändert sind, so dass der Rechner mit dem gleichen Anlaufsiegel beliebig häufig anlaufen kann. Das Siegel muss folglich nicht nach einmaliger Nutzung gelöscht werden.

Um nach dem Neuladen mit einem identischen Programm gleiche Verhältnisse zu haben, wird ein sicherungstechnisches Wirken des Rechners verhindert, bis das Anlaufsiegel übertragen wurde.

Würde dasselbe Programm erneut bei nicht gelöschtem Anlaufsiegel geladen werden, so würde das alte, ungelöschte Anlaufsiegel wirken. Das ist insbesondere dann unerwünscht, wenn beabsichtigt ist, ein neueres Programm zwecks Fehlerbereinigung zu laden, aus Versehen aber das alte Programm erneut geladen wurde, welches sofort wirksam ist. Da das alte Anlaufsiegel nicht gelöscht war, könnte unerkannt eine Fehlerbereinigung nicht wirken. Falls das beim Zurücklesen und Prüfen erkannt wird, gibt es dennoch ein Zeitfenster, in dem das Wirken des Programmes nicht verhindert werden kann. Das Programm läuft dann mit dem alten Fehler und die Situation ist genau wie vor dem Laden. Das ist gefährlich, wenn der Fehler derart wirken kann, dass der Programmlauf des alten Programmes unbedingt verhindert werden sollte.

Das Anlaufsiegel zu löschen ist auch notwendig, wenn für den Rechner gemäß Anspruch 5 nur eine begrenzte Anzahl Rechnerstarts, das heißt Anläufe, gestattet sind, zum Beispiel nach dem Laden einer Testversion, die nicht dauerhaft genutzt werden soll. Hierzu kann der aus Hashwert, Rechneridentifikationsnummer und Anlaufsiegel errechnete Freischaltcode über einen weiteren gesonderten Sollwert das Löschen des Anlaufsiegels betreiben.

Vorzugsweise ist gemäß Anspruch 6 vorgesehen, dass das Löschen des Anlaufsiegels das Neuladen des Rechnerprogramms ermöglicht. Auf diese Weise kann das neue Programm nur dann geladen werden, wenn kein gültiges Anlaufsiegel gespeichert ist. Das Anlaufsiegel muss also zwangsläufig zur Vorbereitung des Ladens gelöscht sein. Da es einen Mechanismus zum Einbringen des Anlaufsiegels geben muss, kann dieser Mechanismus auch verwendet werden, um das Anlaufsiegel zu zerstören. Das Zerstören des Anlaufssiegels mit demselben Vorgang, der das Siegel einträgt, verhindert wirksam das sicherungstechnische Laufen eines als fehlerhaft erkannten Programms. Das Entsiegeln kann also auch ohne - sofortiges - erneutes Programmladen sicherungstechnisch sinnvoll sein.

Aber auch eine abgerüstete Variante ist möglich, wobei gemäß Anspruch 7 das Anlaufsiegel zusammen mit dem Rechnerprogramm geladen wird. Für Rechner mit nicht so hoher oder keiner Sicherheitsverantwortung wird das Anlaufsiegel gleich mit dem Rechnerprogramm beziehungsweise dessen Programmcode übertragen und nicht nach der Prüfung hinsichtlich des ersten Erwartungswertes nachgeliefert. Durch die eindeutige Rechneridentifikationsnummer ist dann immer noch sichergestellt, dass das Programm auf dem richtigen Rechner liegt, wobei das Rechnerprogramm durch das Bilden des Freischaltcodes an den bestimmten Rechner gebunden ist. Allerdings könnte eine zwar gültige, aber veraltete oder zu neue Programmversion quasi aus Versehen geladen werden. Durch den fehlenden Prüfschritt kann eine Restunsicherheit aufgrund der nicht separaten Anlaufsiegelübertragung nicht ausgeschlossen werden.

Würde man das Verfahren ohne das Löschen des Anlaufsiegels betreiben, wäre denkbar, dass ein notwendiges Programmupdate aus Versehen unterbleiben könnte. Dieses Restrisiko ist ebenso wie das Restrisiko, das Anlaufsiegel mit dem Programmladen zu übertragen, bezüglich sicherungstechnischer Erfordernisse zu bewerten.

## Patentansprüche

1. Verfahren zum Verifizieren eines betriebssicheren Zustandes eines Rechners zur Ansteuerung eines sicherheitskritischen Systems, insbesondere Eisenbahnsicherungssystem,
**gekennzeichnet durch**
folgende Schritte:
• eine Kombination aus einem geladenen Rechnerprogramm oder dessen Programmcode oder dessen Hashwert und einer Rechneridentifikationsnummer werden zurückgelesen und mit ersten Erwartungswerten verglichen,
• ein ausschließlich für die vorgesehene Kombination aus Rechnerprogramm, Programmcode oder Hashwert und Rechneridentifikationsnummer gültiges Anlaufsiegel wird in einem nicht umladbaren Programmspeicherbereich des Rechners gespeichert und
• der nicht umladbare Programmspeicherbereich des Rechners ist in einem PLD (programmable logic device) der CPU (central processing unit) vorgesehen und der PLD verrechnet das Anlaufsiegel mit der Kombination aus Rechnerprogramm, Programmcode oder Hashwert und der Rechneridentifikationsnummer zu einem Freischaltcode, der bei Übereinstimmung mit einem zweiten Erwartungswert an die Hardware einer Ausgabebaugruppe des Rechners weitergegeben wird und der diese freischaltet.

2. Verfahren nach Anspruch 1,
**dadurch gekennzeichnet, dass** die Ausgabebaugruppe des Rechners die Adresse des Programmspeicherbereiches, der den Freischaltcode erzeugt hat, mit einem Sollwert vergleicht.

3. Verfahren nach einem der vorangehenden Ansprüche,
**dadurch gekennzeichnet, dass** der nicht umladbare Programmspeicherbereich nach jeder Änderung des Anlaufsiegels, insbesondere bei einem Neuladen des Rechnerprogramms, den Freischaltcode errechnet, wobei das gegebenenfalls vorhandene Anlaufsiegel gelöscht und ein aktuelles Anlaufsiegel gespeichert sein muss.

4. Verfahren nach Anspruch 3,
**dadurch gekennzeichnet, dass** das Anlaufsiegel nach einer bestimmten Anzahl von Rechnerstarts gelöscht wird.

5. Verfahren nach Anspruch 3 oder 4,
**dadurch gekennzeichnet, dass** das Löschen des Anlaufsiegels das Neuladen des Rechnerprogramms ermöglicht.

6. Verfahren nach einem der vorangehenden Ansprüche,
**dadurch gekennzeichnet, dass** das Anlaufsiegel zusammen mit dem Rechnerprogramm geladen wird.

## Claims

1. Method for verifying an operationally safe state of a computer for controlling a safety-critical system, in particular a railway safety system,
**characterised by**
the following steps:
• a combination of a loaded computer program or its program code or its hash value and a computer identification number are read back and compared with first empirical values,
• a start-up seal valid exclusively for the provided combination of computer program, program code or hash value and computer identification number is stored in a program storage area of the computer which cannot be reloaded and
• the program storage area of the computer which cannot be reloaded is provided in a PLD (programmable logic device) of the CPU (central processing unit) and the PLD calculates the start-up seal with the combination of computer program, program code or hash value and the computer identification number to form an activation code which, if it matches a second empirical value, is forwarded to the hardware of an output module of the computer and which activates the same.

2. Method according to claim 1,
**characterised in that** the output module of the computer compares the address of the program storage area, which has generated the activation code, with a target value.

3. Method according to one of the preceding claims,
**characterised in that** after each change in the start-up seal, in particular with a reloading of the computer program, the program storage area which cannot be reloaded calculates the activation code, wherein any start-up seal which may be present is deleted and a current start-up seal has to be saved.

4. Method according to claim 3,
**characterised in that** the start-up seal is deleted after a specific number of computer starts.

5. Method according to claim 3 or 4,
**characterised in that** deletion of the start-up seal allows the computer program to be reloaded.

6. Method according to one of the preceding claims,
**characterised in that** the start-up seal is loaded together with the computer program.

## Revendications

1. Procédé de vérification d'un état de fonctionnement sûr d'un ordinateur de commande d'un système critique du point de vue de la sécurité, notamment d'un système de sécurité de chemin de fer,
**caractérisé par**
les stades suivants :
• on lit en retour une combinaison composée d'un programme d'ordinateur chargé ou de son code de programme ou de sa valeur de hash et d'un numéro d'identification d'ordinateur et on la compare à de premières valeurs escomptées,
• on mémorise un saut de lancement valable exclusivement pour la combinaison prévue composée du programme d'ordinateur du code de programme ou de la valeur de hash et du numéro d'identification de l'ordinateur dans une partie de mémoire de programme non transférable de l'ordinateur et
• la partie de mémoire de programme non transférable de l'ordinateur est prévue dans un PLD (programmable logic device) de la CPU (central processing unit) et le PLD transforme par le calcul le saut de lancement par la combinaison composée du programme d'ordinateur, du code de programme ou de la valeur de hash et du numéro d'identification de l'ordinateur en un code de libération, qui, s'il y a coïncidence avec une deuxième valeur escomptée, est acheminé au matériel d'un module d'émission de l'ordinateur et le libère.

2. Procédé suivant la revendication 1,
**caractérisé en ce que**
le module d'émission de l'ordinateur compare l'adresse de la partie de la mémoire de programme, qui a produit le code de libération, à une valeur de consigne.

3. Procédé suivant l'une des revendications précédentes,
**caractérisé en ce que**
la partie de mémoire de programme non transférable calcule, après chaque modification du saut de lancement, notamment lors d'un chargement nouveau du programme de l'ordinateur, le code de libération, le saut de lancement éventuellement présent devant être effacé et un saut de lancement en cours devant être mémorisé.

4. Procédé suivant la revendication 3,
**caractérisé en ce que**
l'on efface le saut de lancement après un nombre déterminé de démarrages de l'ordinateur.

5. Procédé suivant la revendication 3 ou 4,
**caractérisé en ce que** l'effacement du saut de lancement rend possible le chargement nouveau du programme de l'ordinateur.

6. Procédé suivant l'une des revendications précédentes,
**caractérisé en ce que** l'on charge le saut de lancement ensemble avec le programme de l'ordinateur.
